# EUROPÄISCHE PATENTANMELDUNG

(11) **EP 1 321 470 A1**
(43) Veröffentlichungstag der Anmeldung: **25.06.2003**
(21) Anmeldenummer: 02027900.6
(22) Anmeldetag: 13.12.2002
(51) Int. Cl.: C07F 9/09, C07F 9/11, C07F 9/113

(54) **Verfahren zur Herstellung von Alk(en)ylphosphorsäureestersalzen**

(30) Priorität: 20.12.2001 DE 10163316
(71) Anmelder: Clariant GmbH, 65929 Frankfurt am Main (DE)
(72) Erfinder: Henning, Torsten, Dr., 65812 Bad Soden (DE); Morschhäuser, Roman, Dr., 55122 Mainz (DE); Löffler, Matthias, Dr., 65527 Niedernhausen (DE)
(74) Vertreter: Paczkowski, Marcus, Dr.

(57) **Zusammenfassung**

Die Erfindung betrifft ein Verfahren zur Herstellung von Alk(en)ylphosphorsäureestersalzen, das dadurch gekennzeichnet ist, dass die Alk(en)ylphosphorsäureester in Form ihrer Schmelze mit einer Base umgesetzt werden. Vorteilhafterweise brauchen die Alk(en)ylphosphorsäureester vor der Neutralisation nicht in einem Lösungsmittel gelöst werden.

## Beschreibung

Die Erfindung betrifft ein neues Verfahren zur Herstellung von Alk(en)ylphosphorsäureestersalzen.
Alk(en)ylphosphorsäureester besitzen ausgezeichnete Eigenschaften als Detergenzien, ebenso wie ein hohes Emulgiervermögen und eine gute ökotoxikologische Verträglichkeit.
Zunehmende Bedeutung gewinnt die Verwendung fester, lösungsmittelfreier Phosphorsäureester, insbesondere deren Salze, die aufgrund ihrer neutralen pH-Werte sehr gut hautverträglich sind und als Emulgatoren in kosmetischen und pharmazeutischen Formulierungen vorteilhaft sind.
Die Darstellung der Alkyl- und Alkenylphosphorsäureester erfolgt in bekannter Weise durch Umsetzung von Tetraphosphordekaoxid und Fettalkoholen unter Bildung von Mono- und Diester mit geringen Anteilen an Triestern. Die Phosphorsäureester werden zur Neutralisation in Lösungsmitteln gelöst und anschließend mit Basen, beispielsweise NaOH oder KOH, umgesetzt.
Die JP 62 198 690 beschreibt die Neutralisation von Phosphorsäurestern in einem hydroxylhaltigen, wasserlöslichen Reaktionsmedium, beispielsweise Propylenglykol. Aus ökonomischen, ökologischen und anwendungstechnischen Gründen wäre es wünschenswert eine lösungsmittelfreie Methode zur Herstellung von Alk(en)ylphosphorsäureestersalzen zu finden.

Überraschend wurde nun gefunden, dass Alk(en)ylphosphorsäureester in Form ihrer Schmelze mit einer konzentrierten wässrigen oder festen Base zu Alk(en)ylphosphorsäureestersalzen neutralisiert werden können.
Da die Alk(en)ylphosphorsäureester nicht in einem Lösungsmittel gelöst werden, entfällt auch ein nachträgliches Abziehen desselben. Überdies kann der Restwassergehalt im Alk(en)ylphosphorsäureestersalz so minimiert werden, dass er als Kristallwasser gebunden wird und nicht abgezogen werden muss.

Gegenstand der Erfindung ist ein Verfahren zur Herstellung von Alk(en)ylphosphorsäureestersalzen der Formel (I) und/oder der Formel (II) 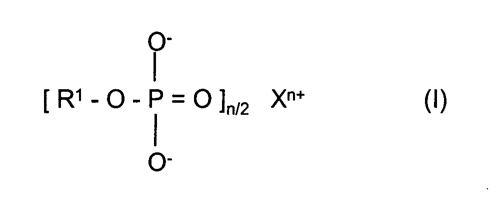 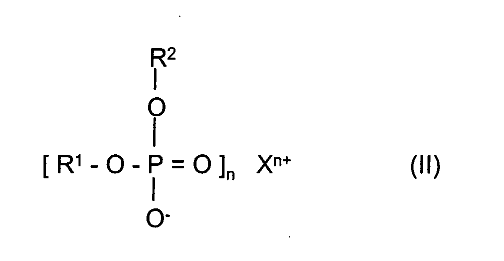 worin
R¹ und R² gleich oder verschieden sind und unabhängig voneinander für einen linearen oder verzweigten Alkyl- oder Alkenylrest mit 6 bis 30 Kohlenstoffatomen stehen und
Xⁿ⁺ für ein Kation mit der Wertigkeit n steht, wobei n für eine ganze Zahl steht, dadurch gekennzeichnet, dass man Alk(en)ylphosphorsäureester der Formel (III) und/oder der Formel (IV) 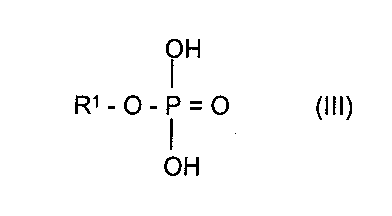 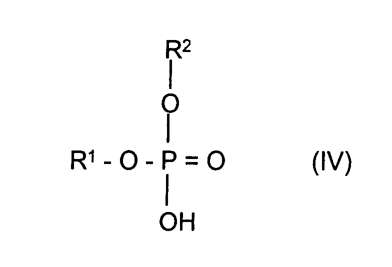 in Form ihrer Schmelze mit einer Base, aus der das Kation Xⁿ⁺ hervorgeht, umsetzt.

Ausdrücklich sei vermerkt, dass der Begriff Base auch Mischungen chemisch verschiedener Basen umfasst. In diesem Fall enthalten die Alk(en)ylphosphorsäureestersalze der Formeln (I) und (II) regelmäßig verschiedene Kationen Xⁿ⁺, die bei der Neutralisation aus den verschiedenen Basen hervorgehen.

Bei den Resten R¹ und R² handelt es sich bevorzugt um Alkyl- oder Alkenylreste mit 8 bis 22 Kohlenstoffatomen.

Die Herstellung der Alk(en)ylphosphorsäureester der allgemeinen Formeln (III) und (IV) erfolgt in der Regel durch Kondensation von Phosphorpentoxid oder Orthophosphorsäure mit Fettalkoholen.
Als Fettalkohole bevorzugt sind Capronalkohol, Caprylalkohol, 2-Ethylhexylalkohol, Caprinalkohol, Laurylalkohol, Isotridecylalkohol, Myristylalkohol, Cetylalkohol, Palmoleylalkohol, Stearylalkohol, Isostearylalkohol, Oleylalkohol, Elaidylalkohol, Petroselinylalkohol, Linolylalkohol, Linolenylalkohol, Elaeostearylalkohol, Arachylalkohol, Gadoleylalkohol, Behenylalkohol, Erucylalkohol, Brassidylalkohol sowie Mischungen derselben.
Bei der Herstellung der Alk(en)ylphosphorsäureester entstehen regelmäßig Gemische aus Mono-, Di- und Triphosphorsäureestern, deren pH-Wert üblicherweise im Bereich 2 bis 5 liegt.
Bevorzugt für die Umsetzung sind Gemische mit einem Monophosphorsäureesteranteil größer 60 Gew.-%, bevorzugt größer 80 Gew.-%.
Anteile an Triphosphorsäureestern stören bei der Umsetzung nicht.

Das Aufschmelzen der Alk(en)ylphosphorsäureester erfolgt bevorzugt in einem Misch-Knet-Reaktor.

Bei den Basen kann es sich um alle organischen oder anorganischen Basen handeln, die geeignet sind die OH-Gruppen der Alk(en)ylphosphorsäureester zu neutralisieren.
Die Base kann als wässrige Lösung, bevorzugt als konzentrierte wässrige Lösung, Suspension oder als Pulver eingesetzt werden. Die Konzentration der wässrigen Lösungen/Suspensionen ist bevorzugt größer oder gleich 25 Gew.-%, besonders bevorzugt 50 Gew.-%, insbesondere bevorzugt 75 Gew.-%.
In einer bevorzugten Ausführungsform wird die Gesamtmenge aus Wasser, das aus der Base und/oder dem Neutralisationswasser stammt, so bemessen, dass sie als Kristallwasser im festen Phosphorsäureestersalz gebunden wird.
In einer bevorzugten Ausführungsform wird die Base als gesättigte wässrige Lösung eingesetzt. Im Falle gesättigter wässriger Lösungen ist eine ausreichend gute Mischbarkeit der Reaktanden bei gleichzeitig minimalem Wassereintrag in die Reaktionsmischung gewährleistet.
Wird die Base als Pulver eingesetzt, so hat dies den Vorteil, dass über die Base kein Wasser eingetragen wird und das bei der Kristallisation gebildete Wasser als Kristallwasser im festen Phosphorsäureestersalz gebunden wird. Ein nachträgliches Entfernen von Restwasser aus dem Produkt kann entfallen.

Als Basen bevorzugt sind Metallhydroxide, Metalloxide, Ammoniak, primäre Amine, sekundäre Amine, tertiäre Amine, Alkanolamine und/oder Aminosäuren.
Als Metallhydroxide bevorzugt sind Alkalihydroxide, bevorzugt NaOH und KOH, Erdalkalihydroxide, bevorzugt Ca(OH)₂, und Erdmetallhydroxide, bevorzugt Al(OH)₃. Als Amine bevorzugt sind primäre Amine mit langkettigen Alkyl- oder Arylresten mit 6 bis 30 Kohlenstoffatomen, besonders bevorzugt 16 bis 22 Kohlenstoffatomen.
Als Alkanolamine bevorzugt sind Monoethanolamin, Diethanolamin und Triethanolamin.
Als Basen besonders bevorzugt sind Alkalihydroxide, insbesondere bevorzugt NaOH und KOH, ganz besonders bevorzugt KOH.
Demnach handelt es sich bei den Kationen Xⁿ⁺ in den Formeln (I) und (II) bevorzugt um Metall-lonen, NH₄⁺ und Ammonium-lonen abgeleitet von Aminen, Alkanolaminen u. Aminosäuren. Bevorzugt hat n den Wert 1, 2 oder 3, besonders bevorzugt 1 oder 2, ganz besonders bevorzugt 1.

Das molare Aquivalenzverhältnis von Phosphorsäureester(n) zu Base liegt bevorzugt im Bereich 1:0,1 bis 1:10, besonders bevorzugt 1:0,5 bis 1:2, insbesondere bevorzugt 1:0,9 bis 1:1,1. Ganz besonders bevorzugt beträgt das Verhältnis 1:1.

Die Umsetzung der Alk(en)ylphosphorsäureester mit der Base erfolgt bevorzugt bei Temperaturen von 50 bis 300°C, besonders bevorzugt 100 bis 180°C, über einen Zeitraum von 0,1 bis 10 Stunden, besonders bevorzugt 0,1 bis 5 Stunden, insbesondere bevorzugt 0,1 bis 3 Stunden.
Vorteilhafterweise liegt die Reaktionstemperatur oberhalb des Schmelzpunktes des Endprodukts, da dann eine ausreichend gute Mischbarkeit der Reaktanden gewährleistet ist.

Bevorzugt werden die Alk(en)ylphosphorsäureester als Schmelze vorgelegt und anschließend mit der Base umgesetzt.

Die Umsetzung erfolgt bevorzugt unter Mischen/Kneten, bevorzugt in einem Misch-Knet-Reaktor.

Überraschend wurde gefunden, dass die Qualität und Verarbeitbarkeit der Produkte steigt, wenn die Reaktionsmischung im Anschluss an die Umsetzung bei 50 bis 300°C noch 0,1 bis 6 Stunden bei Raumtemperatur gemischt/geknetet wird.
Das Mischen/Kneten erfolgt bevorzugt im Misch-Knet-Reaktor.

Die anfallenden Produkte können leicht als Blockware abgefüllt werden oder zu Schuppenware verschuppt oder in Form von Pellets abgefüllt werden.

Die erfindungsgemäß hergestellten Alk(en)ylphosphorsäureestersalze sind für den Einsatz in kosmetischen und pharmazeutischen Formulierungen, insbesondere zur Herstellung von Öl-in-Wasser-Emulsionen, aber auch von Wasser-in-Öl-Emulsionen, geeignet. Bevorzugt eignen sie sich zur Herstellung alkoholfreier Emulsionen.
Die Alk(en)ylphosphorsäureestersalze werden üblicherweise in Mengen von 0,1 bis 10 Gew.-%, bevorzugt 0,3 bis 4 Gew.-%, bezogen auf fertigen Formulierungen, eingesetzt.
Die Emulsionen können als Hautpflegemittel, wie beispielsweise Tagescremes, Nachtcremes, Pflegecremes, Nährcreme, Bodylotions, Salben und dergleichen eingesetzt werden. Als weitere Hilfs- und Zusatzstoffe können unter anderem Ölkörper, Co-Emulgatoren, Überfettungsmittel, Fette, Wachse, Stabilisatoren, biogene Wirkstoffe, Glycerin, Konservierungsmittel, Farb- und/oder Duftstoffe enthalten sein.
Die nachfolgenden Beispiele dienen der näheren Erläuterung der Erfindung ohne sie jedoch darauf einzuschränken. Alle Prozentangaben sind Gewichtsprozente.

### Beispiel 1: Herstellung des Kaliumsalzes des Mono-Cetylphosphorsäureester

1) Vorlage von 670 g ®Hostaphat CC 100 (Monocetylphosphat, Firma Clariant) im Misch-Knet-Reaktor (Fa. List) als Schmelze bei einer Temperatur von 120°C
2) Lösen von 111.4 g KOH-Plätzchen in 40 g Wasser bei 80 bis 90°C
3) Langsame Zugabe der ca. 80°C warmen KOH-Lösung in den laufenden Kneter
4) kräftiges Kneten bei 150°C für 15 Minuten
5) kräftiges Kneten bei Raumtemperatur für weitere 3 Stunden im offenen Misch-Knet-Reaktor, dabei erfolgt durch das Abkühlen eine Granulierung
6) Konfektionierung durch Vermahlen.

Das Produkt war ein weißes bis leicht gelbliches Pulver mit einem Schmelzpunkt von 120 bis 130°C.

### Beispiel 2: Herstellung des Kaliumsalzes des Mono-Cetylphosphorsäureester

1) Vorlage von 670 g ®Hostaphat CC 100 (Monocetylphosphat, Firma Clariant) im Misch-Knet-Reaktor (Fa. List) als Schmelze bei einer Temperatur von 160 bis 180°C
2) Langsame Zugabe von 111,4 g KOH-Pulver.
3) Kräftiges Kneten bei 160 bis 180°C für 3 Stunden
4) kräftiges Kneten bei Raumtemperatur für weitere 3 Stunden im offenen Misch-Knet-Reaktor, dabei erfolgt durch das Abkühlen eine Granulierung
5) Konfektionierung durch Vermahlen.

Das Produkt war ein weißes bis leicht gelbliches Pulver mit einem Schmelzpunkt von 120 bis 130°C.

## Patentansprüche

1. Verfahren zur Herstellung von Alk(en)ylphosphorsäureestersalzen der Formel (I) und/oder der Formel (II) 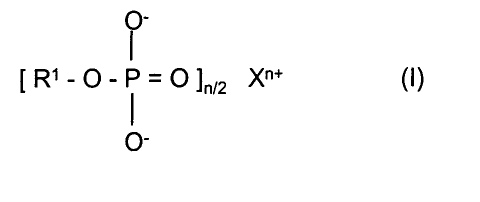 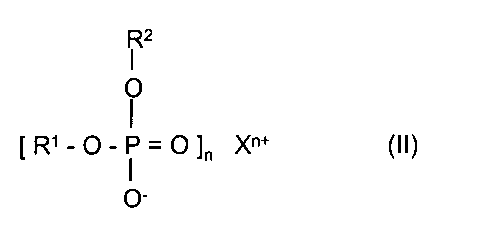 worin
R¹ und R² gleich oder verschieden sind und unabhängig voneinander für einen linearen oder verzweigten Alkyl- oder Alkenylrest mit 6 bis 30 Kohlenstoffatomen stehen und
Xⁿ⁺ für ein Kation mit der Wertigkeit n steht, wobei n für eine ganze Zahl steht, **dadurch gekennzeichnet, dass** man Alk(en)ylphosphorsäureester der Formel (III) und/oder der Formel (IV) 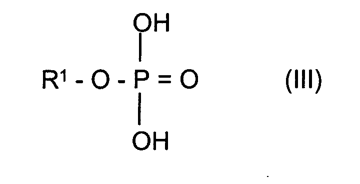 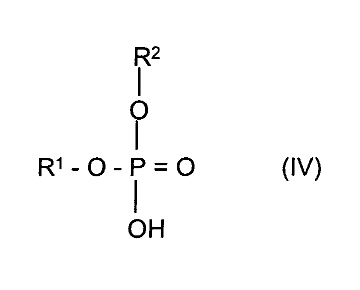 in Form ihrer Schmelze mit einer Base, aus der das Kation Xⁿ⁺ hervorgeht, umsetzt.

2. Verfahren nach Anspruch 1, **dadurch gekennzeichnet, dass** es sich bei den Resten R¹ und R² um Alkyl- oder Alkenylreste mit 8 bis 22 Kohlenstoffatomen handelt.

3. Verfahren nach Anspruch 1 und/oder 2, **dadurch gekennzeichnet, dass** als Alk(en)ylphosphorsäureester eine Mischung, enthaltend Alk(en)ylphosphorsäureester der Formeln (III) und (IV), eingesetzt wird, wobei der Anteil an Alk(en)ylphoshorsäureester(n) der Formel (III), bezogen auf die Mischung, größer 60 Gew.-%, bevorzugt größer 80 Gew.-%, ist.

4. Verfahren nach mindestens einem der Ansprüche 1 bis 3, **dadurch gekennzeichnet, dass** die Base in Form einer konzentrierten wässrigen Lösung oder in Form eines Pulvers eingesetzt wird.

5. Verfahren nach Anspruch 4, **dadurch gekennzeichnet, dass** die Base als gesättigte wässrige Lösung eingesetzt wird.

6. Verfahren nach mindestens einem der Ansprüche 1 bis 5, **dadurch gekennzeichnet, dass** die Base ausgewählt ist aus Metallhydroxiden, Metalloxiden, Ammoniak, primären Aminen, sekundären Amine, tertiären Aminen, Alkanolaminen und/oder Aminosäuren.

7. Verfahren nach Anspruch 6, **dadurch gekennzeichnet, dass** die Base ausgewählt ist aus Alkalihydroxiden und/oder Erdalkalihydroxiden.

8. Verfahren nach Anspruch 7, **dadurch gekennzeichnet, dass** es sich bei der Base um NaOH, KOH und/oder Ca(OH)₂, bevorzugt KOH handelt.

9. Verfahren nach mindestens einem der Ansprüche 1 bis 8, **dadurch gekennzeichnet, dass** das molare Äquivalenzverhältnis von Alk(en)ylphosphorsäureester(n) zu Base im Bereich 1:0,1 bis 1:10, bevorzugt 1:0,5 bis 1:2, besonders bevorzugt 1:0,9 bis 1:1,1, liegt.

10. Verfahren nach mindestens einem der Ansprüche 1 bis 9, **dadurch gekennzeichnet, dass** die Umsetzung bei Temperaturen von 50 bis 300°C, bevorzugt 100 bis 180°C, über einen Zeitraum von 0,1 bis 10 Stunden, bevorzugt 0,1 bis 5 Stunden, erfolgt.

11. Verfahren nach Anspruch 10, **dadurch gekennzeichnet, dass** die Reaktionsmischung im Anschluss an die Umsetzung bei 50 bis 300°C noch 0,1 bis 6 Stunden bei Raumtemperatur gemischt/geknetet wird.

12. Verfahren nach mindestens einem der Ansprüche 1 bis 11, **dadurch gekennzeichnet, dass** die Alk(en)ylphosphorsäureester als Schmelze vorgelegt werden und anschließend mit der Base umgesetzt werden.

13. Verfahren nach mindestens einem der Ansprüche 1 bis 12, **dadurch gekennzeichnet, dass** die Umsetzung unter Mischen/Kneten, bevorzugt in einem Misch-Knet-Reaktor, durchgeführt wird.
